# EUROPEAN PATENT SPECIFICATION

(11) **EP 0 516 884 B1**
(45) Date of publication and mention of the grant of the patent: **16.08.1995**
(21) Application number: 91121490.6
(22) Date of filing: 14.12.1991
(51) Int. Cl.: A47J 31/30

(54) **Extraction system**
Extraktionsanlage
Système d'extraction

(30) Priority: 31.05.1991 JP 129965/91
(43) Date of publication of application: 09.12.1992
(73) Proprietor: SANYO ELECTRIC CO., LTD., Moriguchi-shi, Osaka (JP)
(72) Inventor: Koga, Koji, Kitaadachi-gun, Saitama-ken (JP); Yamamoto, Hiroshi, Saitama-ken (JP); Gonda, Yutaka, Saitama-ken (JP)
(74) Representative: Reitzner, Bruno, Dr.

(56) References cited:
- EP-A- 0 217 211
- DE-A- 2 952 556
- FR-A- 2 558 052

## Description

### BACKGROUND OF THE INVENTION

The present invention relates to an extraction system for mixing powder material with hot water and extracting a solution from a liquid mixture of the powder material and the hot water.

As such an extraction system as known from EP-A2-217 211, it is widely known that an extract solution of coffee, for example, is obtained by mixing coffee powder material milled from coffee beans with hot water and then filtrating a liquid mixture of the coffee powder material and the hot water. In such an extraction system, if a predetermined amount of powder material is dissolved in a predetermined amount of hot water in a stationary condition, a sufficient dissolving effect cannot be obtained. Therefore, as disclosed in Japanese Patent Laid-open No. Sho 61-31108 filed by the present applicant, it has been proposed that the liquid mixture is agitated by compressed air with use of an air pump.

However, such a conventional extraction system has the following drawbacks. That is, particularly in case of installing the extraction system in an automatic vending machine, the extraction system is cooled as a whole during a waiting period between vending operations. As a result, heat of the hot water contacting the inside of the extraction system is absorbed by the extraction system, causing cooling of an extract solution to be poured into a drink cup for vendition.

Further, in case of obtaining an extract solution of coffee powder material, it is known that a concentration of the extract solution can be increased by first steaming the powder material for about three minutes to swell the same and then mixing the steamed powder material with the hot water to further promote the extraction of component of the powder material. However, such steaming is not carried out in the conventional extraction system. Accordingly, the concentration of the extract solution becomes naturally low. Particularly, in case of using the extraction system in the automatic vending machine, it is actually impossible to spend a relatively long period of time such as about three minutes for the steaming in consideration of a demand that a period for each vending operation is to be reduced.

Further, in case of agitating the liquid mixture by using compressed air, a reduction in temperature of the extract solution is further accelerated by the compressed air in the same fashion as in the situation where hot water is cooled by breathing. To compensate the reduction in temperature of the extract solution due to the compressed air, the conventional extraction system is provided with a reheating device for reheating the extract solution. However, while the extract solution can be heated, a burnt smell is undesirably generated from the extract solution.

### SUMMARY OF THE INVENTION

It is accordingly an object of the present invention to provide an extraction system which can provide a tasty extract solution.

According to the present invention as laid down in Claim 1, there is provided an extraction system for mixing powder material with hot water and extracting a solution from a liquid mixture of the powder material and the hot water, the extraction system comprising means for generating steam and means for introducing the steam generated from the steam generating means into an inside of the extraction system.

The extraction system may include means for supplying compressed air to the steam generating means.

According to the present invention, the steam generated from the steam generating means is supplied into the inside of the extraction system as required, thereby increasing a temperature of the inside of the extraction system by a latent heat of the steam. Accordingly, it is possible to prevent the problem that the extraction system is cooled during a waiting period between vending operations, causing cooling of the solution.

Further, prior to mixing of the powder material with the hot water, the powder material can be steamed by using the steam, so that the powder material is swelled to be readily extracted. In particular, since the steam is used for the steaming of the powder material, the steaming can be effected in a short time as compared with the case that hot water is used for the swelling of the powder material.

Further, the liquid mixture of the powder material and the hot water can be agitated by supplying the steam, so that the dissolution of the powder material in the hot water can be promoted, and there is no possibility of the liquid mixture being cooled by the agitation. Accordingly, a reheating device can be eliminated, or a heating value thereof can be reduced.

### BRIEF DESCRIPTION OF THE DRAWINGS

Fig. 1 is a schematic view illustrating a construction of an extraction system according to a preferred embodiment of the present invention;
Fig. 2 is a perspective view of the extraction system shown in Fig. 1;
Fig. 3 is a vertical sectional view of a chamber in the extraction system shown in Fig. 1;
Fig. 4 is a schematic view illustrating the steaming of powder material by using steam in the extraction system shown in Fig. 1;
Fig. 5 is a schematic view illustrating the agitation by using steam in the extraction system shown in Fig. 1;
Fig. 6 is a schematic view illustrating the pressure extraction in the extraction system shown in Fig. 1;
Fig. 7 is a schematic view illustrating a residue wasting operation in the extraction system shown in Fig. 1;
Fig. 8 is a timing chart of control operation in the case of carrying out the steaming of the powder material by using steam without the agitation in the extraction system shown in Fig. 1;
Fig. 9 is a timing chart of control operation in the case of carrying out the agitation of a liquid mixture of the powder material and the hot water by using steam without the steaming in the extraction system shown in Fig. 1;
Fig. 10 is a timing chart of control operation in the case of carrying out both the steaming and the agitation by using steam in the extraction system shown in Fig. 1;
Fig. 11 is a vertical sectional view of another preferred embodiment of steam generating means in the extraction system shown in Fig. 1;
Fig. 12 is a vertical sectional view showing a modification of the steam generating means shown in Fig. 11;
Fig. 13 is a vertical sectional view showing a modification of the steam generating means shown in Fig. 12;
Fig. 14 is a schematic view illustrating a construction of another preferred embodiment of the extraction system including a modified form of the chamber shown in Fig. 3;
Fig. 15 is a timing chart of control operation in the case of carrying out the steaming, the agitation, and the pressure extraction by using steam in the extraction system shown in Fig. 14;
Fig. 16 is a timing chart of control operation in the case of carrying out the steaming by using steam, the agitation and the pressure extraction by using compressed air in the extraction system shown in Fig. 14;
Fig. 17 is a schematic view illustrating a construction of a further preferred embodiment of the extraction system including a modification of the chamber shown in Fig. 14;
Fig. 18 is a timing chart of control operation in the case of carrying out the steaming, the agitation, and the pressure extraction by using steam in the extraction system shown in Fig. 17;
Fig. 19 is a timing chart of control operation in the case of carrying out the steaming by using steam and the pressure extraction by using compressed air without the agitation in the extraction system shown in Fig. 17;
Fig. 20 is a schematic view illustrating a construction of a still further preferred embodiment of the extraction system including a further modification of the chamber shown in Fig. 17 for the purpose of prevention of wetting of the powder material in a material supplying device; and
Fig. 21 is a timing chart of control operation in the extraction system shown in Fig. 20.

### DETAILED DESCRIPTION OF THE PREFERRED EMBODIMENTS

There will now be described some preferred embodiments of the present invention with reference to the drawings.

Reference numeral 1 generally denotes an extraction system according to the present invention. In the extraction system 1, a material supplying device 2 is provided to supply a predetermined amount of coffee powder material upon every vending operation. Reference character C generally denotes a chamber made of synthetic resin. The chamber C is constituted of a funnel 7 and an extracting chamber 9. The funnel 7 is provided with an upper opening 4 and a lower opening 5 having a diameter smaller than that of the upper opening 4. The funnel 7 has an inclined portion 6 formed between the upper opening 4 and the lower opening 5. The extracting chamber 9 is connected at its upper end to the lower opening 5 of the funnel 7. A valve 8 is provided to control the communication between the funnel 7 and the extracting chamber 9. The powder material supplied from the material supplying device 2 through a shoot 10 is introduced from the upper opening 4 into the funnel 7. Hot water is supplied from a hot water tank 11 through a hot water supply pipe 12 into the funnel 7.

The hot water in the hot water tank 11 is normally heated by a heater 13 to maintain a constant temperature of 90 °C or more. The hot water pipe 12 is connected through an electromagnetic valve 14 to the hot water tank 11. The hot water in the hot water tank 11 is also supplied through an electromagnetic valve 15 and a check valve 16 to steam generating means 17.

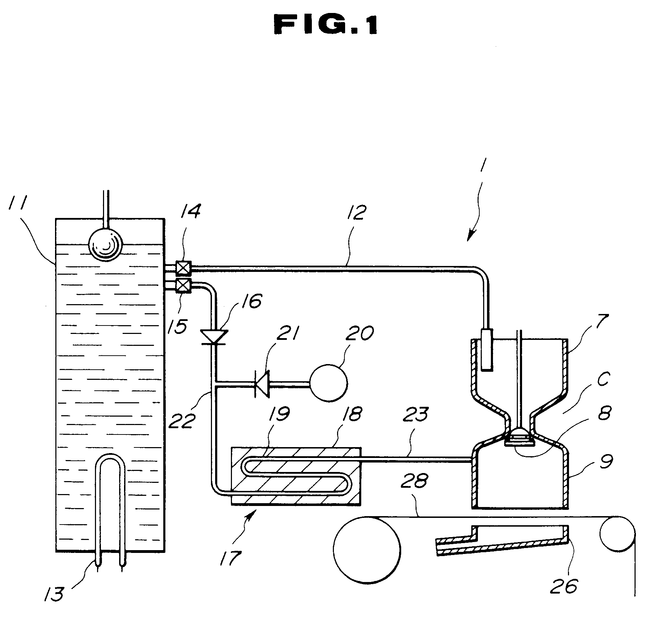

The steam generating means 17 includes a heater 18 formed from a block of material having a large heat capacity, such as iron or aluminum. A zigzag passage 19 is formed in the heater 18. The heater 18 is normally heated by heat generating means (not shown in Fig. 1) to maintain a constant temperature of 100 °C or more. The steam generating means 17 further includes compressed air supplying means 20 formed from an air compressor. The compressed air supplying means 20 is connected through a check valve 21 to a pipe 22 connected between the check valve 16 and an inlet of the passage 19 in the heater 18. An outlet of the passage 19 is connected through a steam supply pipe 23 to a steam inlet 24 provided at an upper portion of the extracting chamber 9.

An extract receptacle 26 is located below the extracting chamber 9, and an annular gasket 27 is embedded in an upper end of the extract receptacle 26 opposed to a lower end of the extracting chamber 9. A filter paper 28 is interposed between the extract receptacle 26 and the extracting chamber 9 so as to be movable in the horizontal direction.

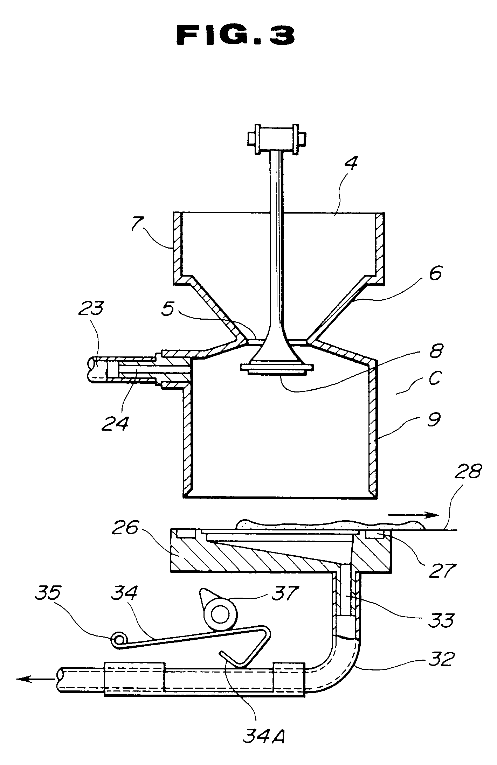

The valve 8 and the chamber C are individually movable in a vertical direction by driving means 30. The valve 8 is controlled to have a first lift position where it is fully closed to seal the lower opening 5, a second lift position where it is closed so as to allow pass of air and steam only as shown in Fig. 1, and a third lift position where it is opened enough to separate from the lower opening 5 as shown in Fig. 3. The chamber C is controlled to have a first lift position where it is separate from the filter paper 28 as shown in Fig. 3 and a second lift position where the lower end of the chamber C is in tight contact with the gasket 27 through the filter paper 28.

The extract receptacle 26 is formed at its lower end with an extract outlet 33 connected to an extract feeding tube 32 for feeding an extracted coffee. The feeding tube 32 is formed of silicone rubber. An operating member 34 is provided so as to elastically deform the feeding tube 32, thereby controlling opening and closing of the feeding tube 32. The operating member 34 is pivotably supported at one end thereof to a shaft 35, and the other end of the operating member 34 is bent to form an operating portion 34A. A cam 37 is rotationally provided to effect pivotal movement of the operating member 34 and thereby open or close the feeding tube 32.

The extract feeding tube 32 is connected at a lower end thereof to a mixing bowl 38 to which sugar and cream are supplied from additional material supplying devices 39 and 40 upon every vending operation. In the mixing bowl 38, the sugar and the cream are mixed with the coffee supplied through the feeding tube 32, and the coffee with the sugar and the cream thus obtained is poured into a coffee cup 41 for vendition.

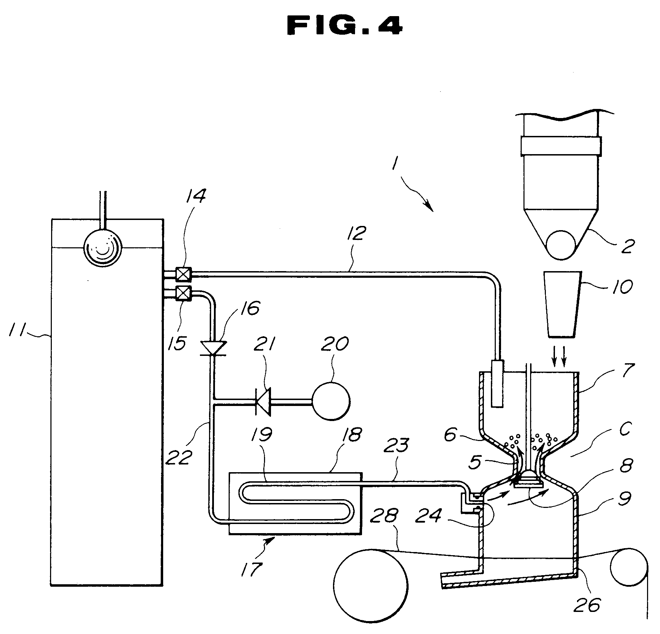

The operation of the extraction system 1 having the above-mentioned construction will now be described with reference to Figs. 4 to 7. The present invention can achieve three kinds of operations, i.e., warmth keeping or heating of the chamber C by steam, steaming of the powder material by steam, and agitation of the mixture of the powder material and the hot water by steam, in addition to the operation to be carried out by the aforementioned prior art extraction system.

In case of installing the extraction system 1 in an automatic vending machine, when a waiting period is long as in the early morning at a low outside air temperature as in winter, the chamber C of the extraction system 1 is reduced in temperature. In this case, the valve 8 is operated to fully open the lower opening 5 with the aid of a timer or a sensor for sensing the temperature of the chamber C. Further, the electromagnetic valve 15 is opened for a predetermined period of time. When the electromagnetic valve 15 is opened, the hot water in the hot water tank 11 is supplied to the heater 18 of the steam generating means 17. The hot water thus supplied is introduced into the passage 19 which has already been heated to a constant temperature of 100 °C or more, and is instantaneously evaporated to generate a superheated steam in the course of flowing in the passage 19. The superheated steam thus generated is blown through the steam supply pipe 23 into the extracting chamber 9. The steam blown into the extracting chamber 9 rises to pass through the lower opening 5 into the funnel 7. As a result, a latent heat is exchanged between the steam and the inner surface of the chamber C to cause an increase in temperature of the inner surface of the chamber C. Accordingly, even when the waiting period is long, the solution in the chamber C is prevented from being cooled. Particularly, since the steam has a large heat capacity, the heating of the chamber C can be quickly effected even if the heater 18 has a small capacity, as compared with the case that air only is fed to pass through the heater 18. After supplying the steam into the chamber C, the compressed air supplying means 20 may be operated to blow off a residual water content or solid content in the passage 19.

Next, the steaming of the powder material by steam will be described with reference to Fig. 4. In this case, the valve 8 is operated from the initial condition shown in Fig. 1 to close the lower opening 5 in such a manner as to permit air and steam only to pass through the lower opening 5. The chamber C is lowered to closely contact the extract receptacle 26 through the filter paper 28. The powder material is supplied from the material supplying device 2 to fall into the funnel 7. The electromagnetic valve 15 is opened for a predetermined period of time to generate steam in the steam generating means 17 and supply the same into the extracting chamber 9. As a result, the steam rises to pass through the lower opening 5 into the funnel 7, thereby steaming the powder material in the funnel 7 from the lower side thereof.

Thus, the powder material in the funnel 7 is steamed by the superheated steam blowing up through the lower opening 5. Accordingly, as compared with the case that a small amount of hot water is poured to the powder material to swell the same as in the prior art, the powder material can be quickly steamed to swell according to the present invention, thereby smoothly effecting the subsequent extraction.

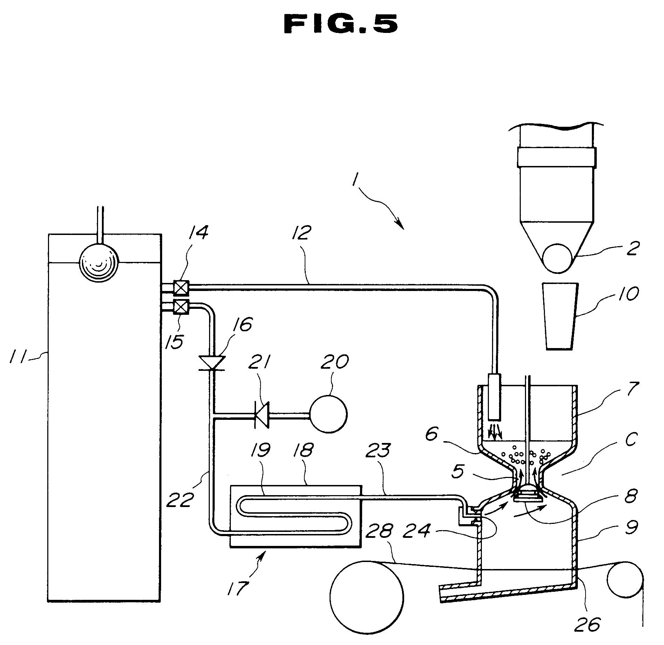

Next, the agitation of the mixture of the powder material and the hot water by steam will be described with reference to Fig. 5 (steam agitation). Similarly to Fig. 4, the valve 8 is operated to close the lower opening 5 in such a manner as to permit air and steam only to pass through the lower opening 5, and the chamber C is lowered to closely contact the extract receptacle 26 through the filter paper 28. In this condition, the powder material is supplied from the material supplying device 2 into the funnel 7, and the electromagnetic valve 14 is opened to supply a predetermined amount of hot water from the hot water tank 11 through the hot water supply pipe 12 to the funnel 7, thus obtaining a mixture of the powder material and the hot water. On the other hand, the electromagnetic valve 15 is also opened to generate steam in the steam generating means 17 and supply the same into the extracting chamber 9. The superheated steam introduced into the extracting chamber 9 rises to pass through the lower opening 5 and then rise in the form of bubbles in the liquid mixture in the funnel 7, thereby agitating the liquid mixture. Accordingly, dissolution of the powder material can be effected quickly by the steam agitation. In this steam agitation, since the bubbles of steam rising in the liquid mixture has a high temperature, the temperature of the liquid mixture can be maintained. Thus, there is no possibility of the temperature of the liquid mixture being lowered by the bubbles. In this case, compressed air may be supplied from the compressed air supplying means 20 to the extracting chamber 9 simultaneously with the supply of the steam, thereby more smoothly effecting the agitation of the liquid mixture. During the above operation, the operating member 34 is maintained to close the extract feeding tube 32.

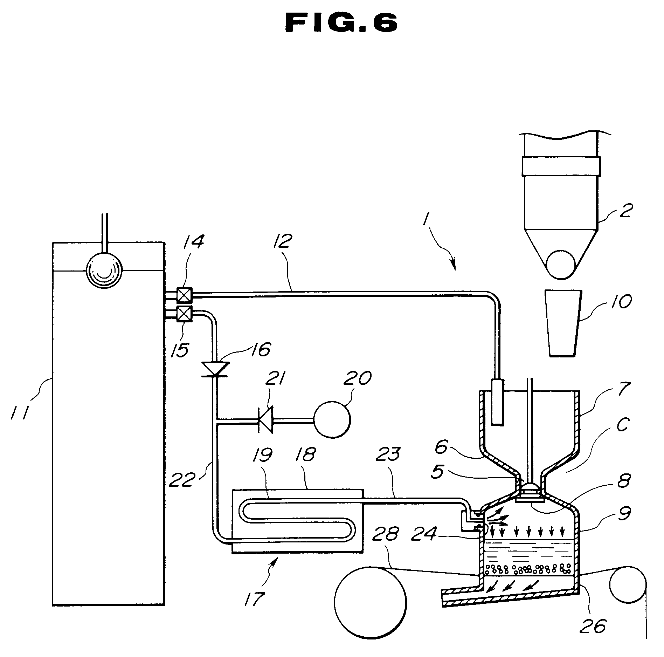

After carrying out the steaming and/or the agitation as mentioned above, the valve 8 is lowered to fully open the lower opening 5 and allow the liquid mixture in the funnel 7 to fall into the extracting chamber 9. At this time, the chamber C remains in close contact with the extract receptacle 26 through the filter paper 28. After the liquid mixture falls into the extracting chamber 9, the valve 8 is lifted again to fully close the lower opening 5 as shown in Fig. 6. Then, the compressed air supplying means 20 is operated to supply compressed air from the steam inlet 24 into the extracting chamber 9, thereby pressurizing the inside of the extracting chamber 9. As a result, the liquid mixture now residing in the extracting chamber 9 is forced down by the compressed air, and is filtrated by the filter paper 28 to obtain an extract solution as a coffee drink. At this time, the operating member 34 is operated to open the extract feeding tube 32, thereby feeding the solution through the-mixing bowl 38 to the coffee cup 41.

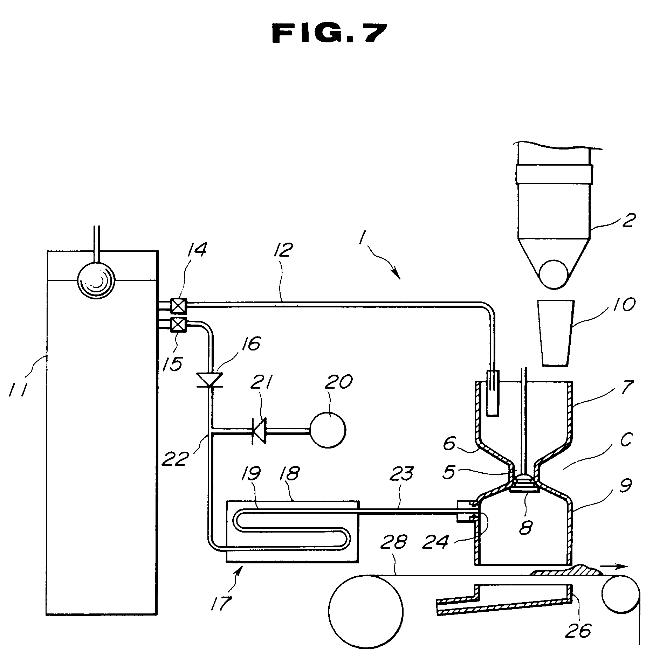

After ending the extraction mentioned above, the chamber C is lifted to separate from the filter paper 28 as shown in Fig. 7. In this condition, the filter paper 28 is horizontally moved a predetermined distance, and a residue of the powder material left on the filter paper 28 is wasted. Thereafter, the chamber C and the valve 8 are restored to the initial condition shown in Fig. 1.

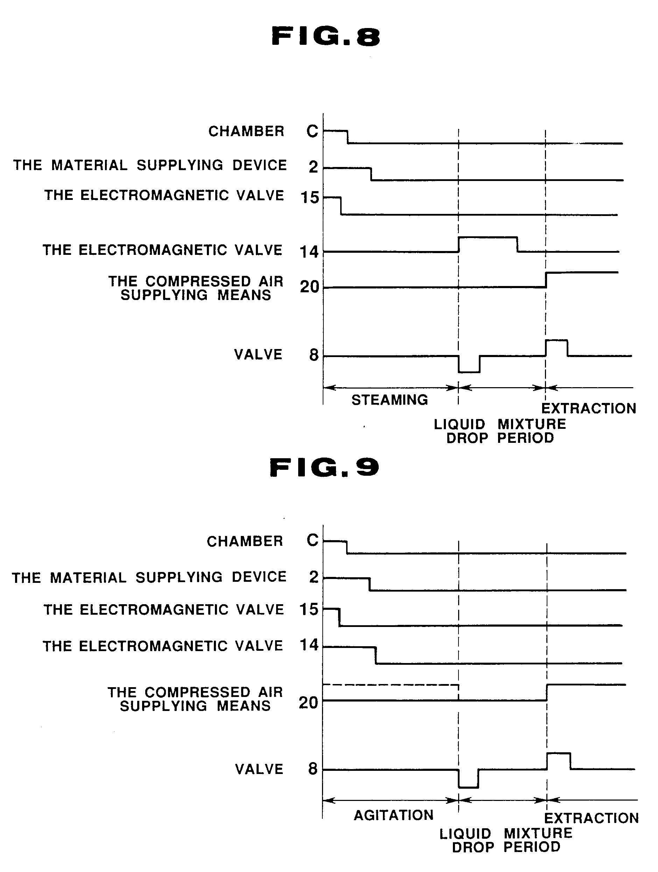

While all the functions of the extraction system 1 according to the present invention have been described, a manner of combination of these functions is dependent on tastes of users or customers to coffee or kinds of coffee beans. For example, in case of liking of not so strong coffee or depending on some kind of coffee beans, the above-mentioned steaming is thought to be unnecessary, or in some case, the agitation may be unnecessary. In the following, there will be described control operations of the extraction system 1 in various different manners of use thereof with reference to the timing charts shown in Figs. 8 to 10. It is to be noted that the control operations are carried out in accordance with a software stored in a control device (not shown).

Fig. 8 shows a timing chart of control operation in the case of carrying out the steaming without the agitation. When the operation is started from the initial condition (e.g., when a select button of an automatic vending machine is depressed by a customer), the chamber C is lowered from the initial upper position after a short period of time, and the material supplying device 2 is operated to supply a predetermined amount of powder material into the funnel 7. The electromagnetic valve 15 is opened for a predetermined period of time to supply the hot water to the heater 18 and thereby generate a superheated steam. The superheated steam is supplied from the steam generating means 17 to the chamber C. The valve 8 is in the condition where air and steam only are allowed to pass through the lower opening 5. The electromagnetic valve 14 is in a closed condition, and the compressed air supplying means 20 is in a stop condition. The above condition of the extraction system 1 is a condition for the steaming. When a predetermined period of time for the steaming is terminated, the valve 8 is lowered to fully open the lower opening 5, and the electromagnetic valve 14 is opened to supply a predetermined amount of hot water from the hot water tank 11 to the funnel 7. Thus, the steamed powder material and the hot water are allowed to fall into the extracting chamber 9 (liquid mixture drop period). When the liquid mixture drop period is terminated, the valve 8 is lifted to fully close the lower opening 5. Then, the compressed air supplying means 20 is driven to pressurize the inside of the extracting chamber 9 as blowing a residual water content in the passage 19. As a result, the liquid mixture in the extracting chamber 9 is forced down to be filtrated by the filter paper 28, thus obtaining an extract solution (extraction period).

Fig. 9 shows a timing chart of control operation in the case of carrying out the steam agitation without the steaming. When the operation is started from the initial condition, the chamber C is lowered from the initial upper position after a short period of time, and the material supplying device 2 is operated to supply a predetermined amount of powder material into the funnel 7. The electromagnetic valve 15 is opened for a predetermined period of time to supply the hot water to the heater 18 and thereby generate a superheated steam. The superheated steam is supplied from the steam generating means 17 to the chamber C. The valve 8 is in the condition where air and steam only are allowed to pass through the lower opening 5. The electromagnetic valve 14 is also opened to supply a predetermined amount of hot water from the hot water tank 11 to the funnel 7, thus mixing the hot water with the powder material in the funnel 7. This condition is a condition for the steam agitation. During a predetermined period of time for the steam agitation, the compressed air supplying means 20 may be driven to supply a compressed air to the chamber C. In this case, since the compressed air to be supplied together with the superheated steam has a relatively high temperature, the agitation of the liquid mixture can be promoted. When the period for the steam agitation is terminated, the valve 8 is lowered to fully open the lower opening 5 and thereby drop the liquid mixture into the extracting chamber 9 (liquid mixture drop period). When the liquid mixture drop period is terminated, the valve 8 is lifted to fully open the lower opening 5. Then, the compressed air supplying means 20 is driven to pressurize the inside of the extracting chamber 9 as blowing a residual water content in the passage 19. As a result, the liquid mixture in the extracting chamber 9 is forced down to be filtrated by the filter paper 28, thus obtaining an extract solution (extraction period).

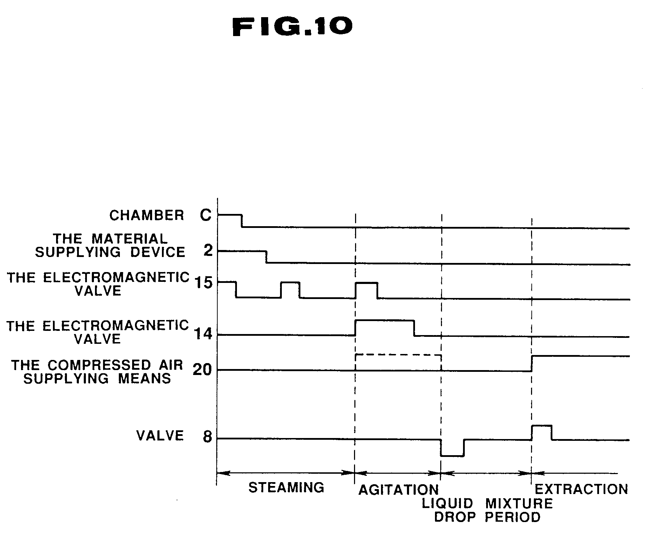

Fig. 10 shows a timing chart of control operation in the case of carrying out both the steaming and the steam agitation. When the operation is started from the initial condition, the chamber C is lowered from the initial upper position after a short period of time, and the material supplying device 2 is operated to supply a predetermined amount of powder material into the funnel 7. The electromagnetic valve 15 is intermittently opened for every predetermined period of time to supply the hot water to the heater 18 and thereby generate a superheated steam. The superheated steam is supplied from the steam generating means 17 to the chamber C. The valve 8 is in the condition where air and steam only are allowed to pass through the lower opening 5. The electromagnetic valve 14 is in a closed condition, and the compressed air supplying means 20 is in a stop condition. In the above condition, the steaming of the powder material in the funnel 7 is carried out for a predetermined period of time. When the period for the steaming is terminated, the electromagnetic valve 14 is also opened to supply a predetermined amount of hot water from the hot water tank 11 to the funnel 7, thus mixing the hot water with the steamed powder material in the funnel 7. This condition is a condition for the steam agitation. During a predetermined period of time for the steam agitation, the compressed air supplying means 20 may be driven to supply a compressed air to the chamber C. In this case, since the compressed air to be supplied together with the superheated steam has a relatively high temperature, the agitation of the liquid mixture can be promoted. When the period for the steam agitation is terminated, the valve 8 is lowered to fully open the lower opening 5 and thereby drop the liquid mixture into the extracting chamber 9 (liquid mixture drop period). When the liquid mixture drop period is terminated, the valve 8 is lifted to fully close the lower opening 5. Then, the compressed air supplying means 20 is driven to pressurize the inside of the extracting chamber 9 as blowing a residual water content in the passage 19. As a result, the liquid mixture in the extracting chamber 9 is forced down to be filtrated by the filter paper 28, thus obtaining an extract solution (extraction period). At this time, the electromagnetic valve 15 may be opened simultaneously with the driving of the compressed air supplying means 20 to supply steam together with the compressed air into the extracting chamber 9 for the pressure extraction. A series of operation of the extraction system 1 as mentioned above was actually tested to achieve a short operation period of about 35 seconds. Thus, this operation period could be made shorter than that in the conventional method.

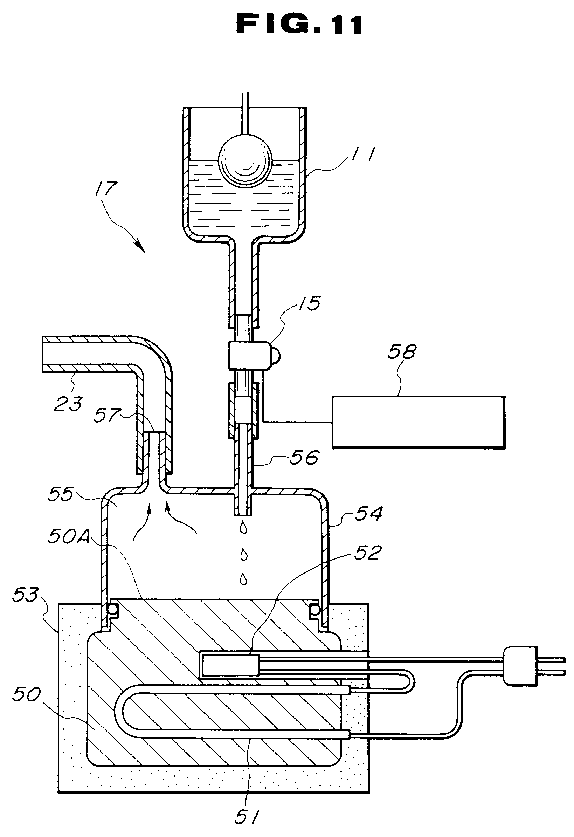

Fig. 11 shows another preferred embodiment of the steam generating means 17. In this preferred embodiment, a heater 50 is formed from a block of material having a large heat capacity, such as iron or aluminum, and an electric heater 51 as heat generating means and a thermostat 52 are embedded in the heater 50. The electric heater 51 and the thermostat 52 are connected together in series to a power source. An outer periphery of the heater 50 except its horizontal upper surface 50A is covered with a heat insulator 53. The upper surface 50A of the heater 50 is covered with a detachable transparent plastic cover 54 to define a steam generating chamber 55 therein. The plastic cover 54 is formed at its upper end with an inlet pipe 56 which is connected through the electromagnetic valve 15 to the hot water tank 11. The plastic cover 54 is further formed at its upper end with an outlet pipe 57 juxtaposed to the inlet pipe 56. The outlet pipe 57 is connected to the steam supply pipe 23.

The heater 50 is heated by the electric heater 51, and the temperature of the heater 50 is normally maintained at 100 °C or more by the thermostat 52. The electromagnetic valve 15 is controlled to be opened or closed by a control device 58 to drop the hot water in the hot water tank 11 onto the upper surface 50A of the heater 50. In this case, cold water rather than the hot water may be stored in the hot water tank 11. The hot water or the cold water having dropped onto the upper surface 50A is instantaneously evaporated to generate steam, which is in turn supplied from the outlet pipe 57 through the steam supply pipe 23 to the chamber C. The steam thus supplied is utilized for the steaming of the powder material, the agitation of the liquid mixture, and the pressure extraction of the liquid mixture. Although a dissolved matter contained in the hot water or the cold water is separated and solidified on the upper surface 50A simultaneously with the evaporation, such a solid content thus generated is prevented from being supplied to the chamber C because the outlet pipe 57 is located at the upper end of the plastic cover 54. Further, although the solid content adheres to the upper surface 50A of the heater 50, it can be easily cleaned off by removing the plastic cover 54 because the same is detachably mounted.

In the case that the extraction system 1 is used in the automatic vending machine, the following control method may be considered as a method of controlling the electromagnetic valve 15 by the control device 58. That is, since an amount of the hot water or the cold water to be used upon every vending operation is a little and almost constant amount, this amount may be suitably divided to be dropped down to the heater 50 for each function, so as to extract a cup of solution (coffee drink). For instance, when the total amount of the hot water or the cold water to be used upon every vending operation is 10 g, a partial amount of 2 g is used for the steaming of the powder material; a partial amount of 3 g is used for the agitation; and the remaining amount of 5 g is used for the pressure extraction and the blowing in the steam supply pipe 23.

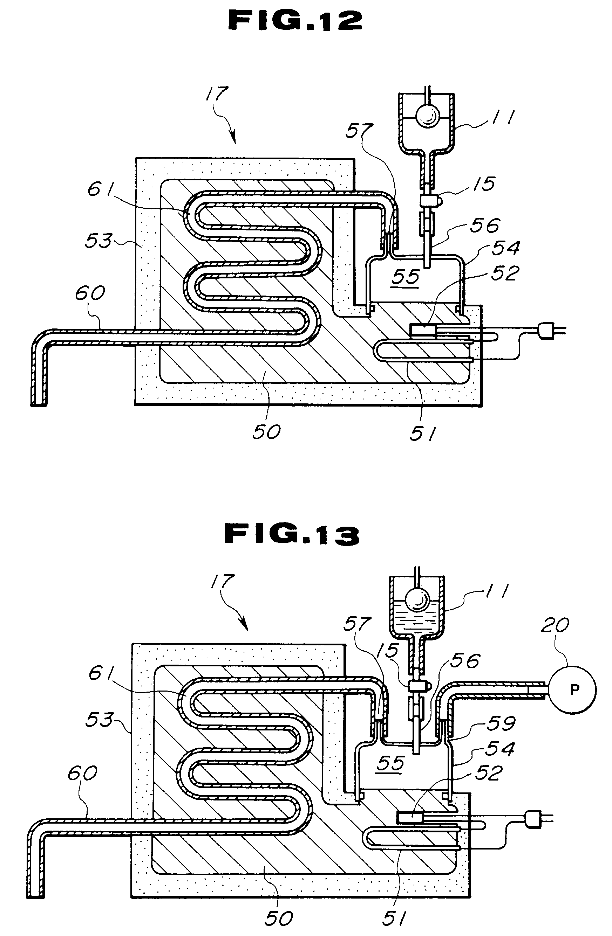

Further, if the steam to be used for the steaming of the powder material and/or the agitation of the liquid mixture is saturated steam, the saturated steam is readily dewed on a cold inner surface of the chamber C to contract a volume, resulting in a problem that the intended object cannot be achieved. Therefore, the steam to be used must be superheated steam. In the case where it is difficult to obtain a superheated steam in the preferred embodiment shown in Fig. 11, the heater 50 may be expanded as shown in Fig. 12. Referring to Fig. 12, a superheating portion 61 is constructed by forming a passage 60 in the expanded heater 50. The passage 60 is connected at one end thereof to the outlet pipe 57 of the plastic cover 54, and the other end of the passage 60 is connected to the steam supply pipe 23. Accordingly, the steam generated in the steam generating chamber 55 is heated again during flowing from the outlet pipe 57 through the superheating portion 61, and it is thereby supplied as a superheated steam to the chamber C.

Fig. 13 shows a modification of the preferred embodiment shown in Fig. 12, wherein the compressed air supplying means 20 is connected to the steam generating means 17. Referring to Fig. 13, the plastic cover 54 is formed at its upper end with a compressed air inlet pipe 59 juxtaposed to the water inlet pipe 56 on the opposite side of the steam outlet pipe 57, so that the compressed air supplying means 20 is connected to the compressed air inlet pipe 59 of the plastic cover 54. In this modification, compressed air supplied from the compressed air supplying means 20 is used in substitution for the superheated steam or in combination thereof in the case that the agitation or the pressure filtration is not sufficient by the superheated steam only. With this construction, the agitation or the pressure filtration can be further promoted. Furthermore, dewed water in the pipe can be blown off by the compressed air.

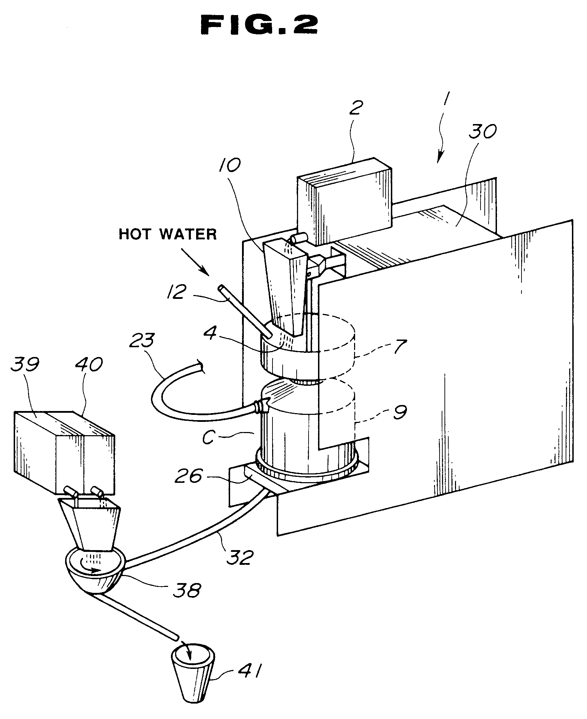

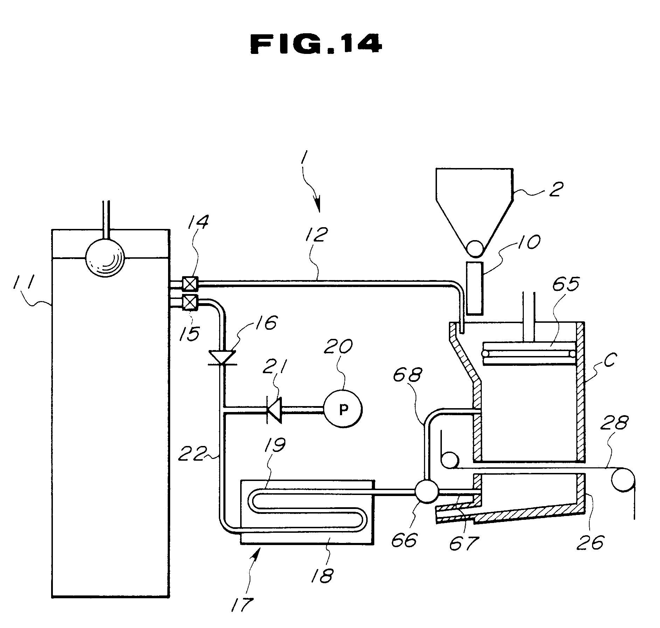

Fig. 14 shows another preferred embodiment of the chamber C in the extraction system 1. Unlike the shape of the chamber C shown in Figs. 1 to 3, the chamber C shown in Fig. 14 is generally cylindrical with an expanded upper portion. Further, the valve 8 shown in Figs. 1 to 3 is replaced by a piston-like lid 65 vertically movably provided in the chamber C. A selector valve 66 is provided at the outlet of the passage 19 in the steam generating means 17, and two steam supply pipes 67 and 68 are connected to the selector valve 66. The steam supply pipes 67 and 68 are communicated with the extract receptacle 26 and the chamber C, respectively.

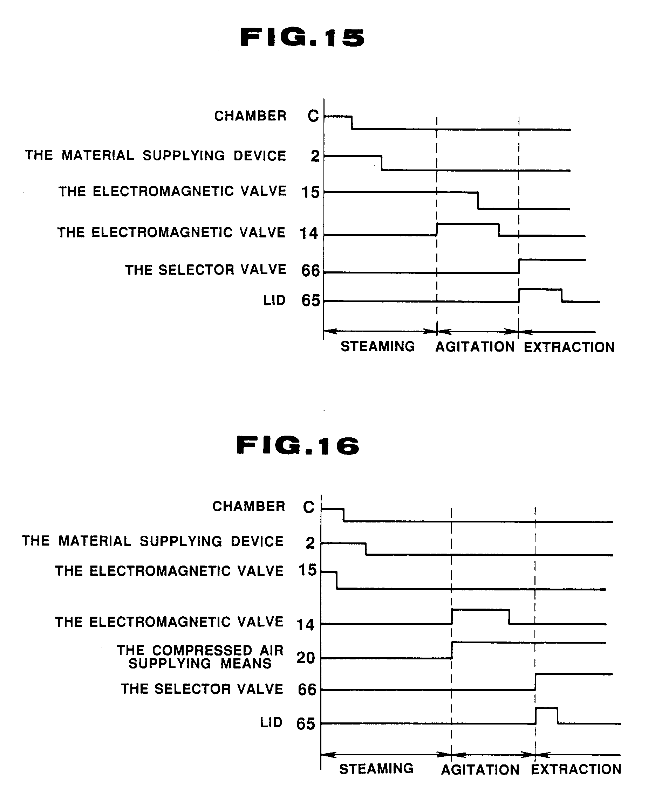

The operation of the extraction system 1 shown in Fig. 14 will now be described with reference to the timing chart shown in Fig. 15. Fig. 15 illustrates timing control of the steaming, the agitation, and the pressure extraction. When the operation is started from the initial condition shown in Fig. 14, the chamber C is lowered from the initial upper position after a short period of time to come into close contact with the extract receptacle 26 through the filter paper 28. The lid 65 is in an upper position, and the material supplying device 2 is operated to supply a predetermined amount of powder material into the chamber C. Then, the electromagnetic valve 15 is opened to supply a hot water to the heater 18 and thereby generate a superheated steam. The selector valve 66 is previously in communication with the steam supply pipe 67.
Accordingly, the superheated steam is supplied from the steam generating means 17 through the steam supply pipe 67 into the extract receptacle 26. The superheated steam thus introduced into the extract receptacle 26 rises to pass through the filter paper 28 into the chamber C. At this time, the electromagnetic valve 14 is in a closed condition, and the compressed air supplying means 20 is in a stop condition. In this way, the steaming of the powder material by the superheated steam is carried out. When a predetermined period for the steaming is terminated, the electromagnetic valve 14 is also opened to supply a predetermined amount of hot water into the chamber C, thereby mixing the hot water with the steamed powder material in the chamber C. In this way, the steam agitation of the liquid mixture is carried out. During a predetermined period for the steam agitation, the electromagnetic valve 15 is closed. When this period for the steam agitation is terminated, the lid 65 is lowered to sealingly close an upper portion of the chamber C, and the selector valve 66 is operated to communicate with the steam supply pipe 68. Accordingly, the superheated steam is supplied from the steam generating means 17 through the steam supply pipe 68 into the chamber C to thereby pressurize the inside of the chamber C. As a result, the liquid mixture in the chamber C is forced down to be filtrated by the filter paper 28, thus obtaining an extract solution (extraction period).

Fig. 16 shows a timing chart of control operation in the case of carrying out the steaming of the powder material by steam, the agitation of the liquid mixture by compressed air, and the pressure extraction by compressed air. In this case, the electromagnetic valve 15 is opened for a predetermined period of time at starting of the operation for the purpose of the steaming only. During the agitation and the pressure extraction to be carried out after the steaming, the compressed air supplying means 20 is driven to supply a compressed air to the extract receptacle 26 or the chamber C for the purpose of the agitation or the pressure extraction.

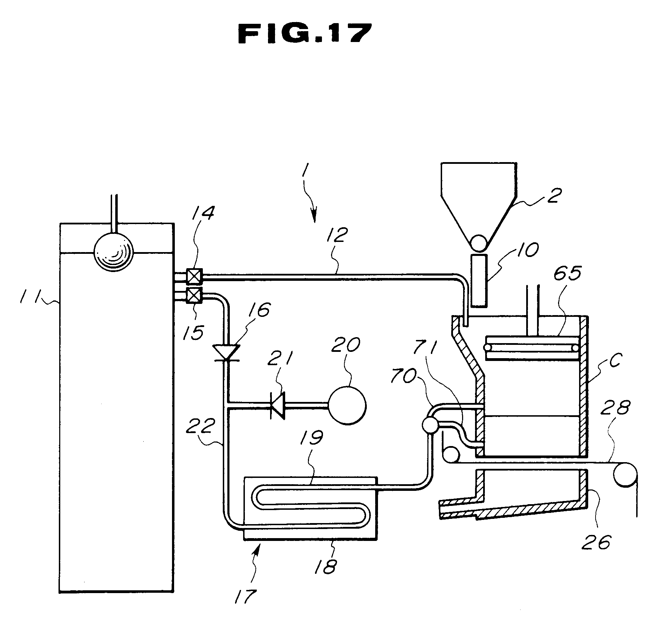

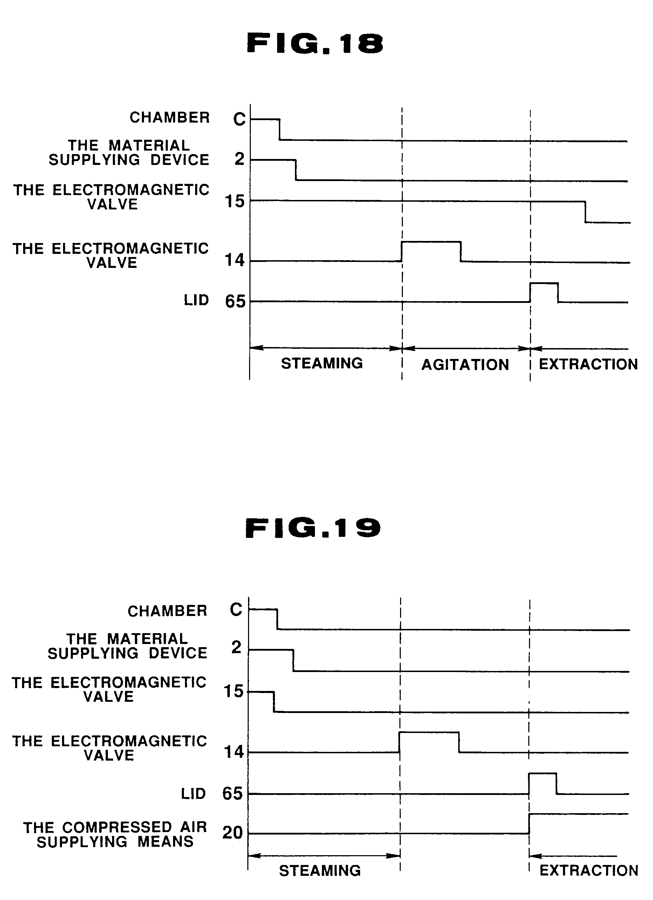

Fig. 17 shows a modification of the extraction system 1 shown in Fig. 14. In this modification, the selector valve 66 employed in Fig. 14 is eliminated, and two steam supply pipes 70 and 71 are both connected to the chamber C. The operation of the extraction system 1 shown in Fig. 17 will now be described with reference to the timing chart shown in Fig. 18. Fig. 18 illustrates timing control of the steaming of the powder material, the steam agitation, and the pressure extraction by steam. When the operation is started from the initial condition, the chamber C is lowered from the initial upper position after a short period of time to come into close contact with the extract receptacle 26 through the filter paper 28. The lid 65 is in an upper position, and the material supplying device 2 is operated to supply a predetermined amount of powder material into the chamber C. Then, the electromagnetic valve 15 is opened to supply hot water to the heater 18 and thereby generate superheated steam. The superheated steam is supplied from the steam generating means 17 through the steam supply pipes 70 and 71 to the chamber C.
Accordingly, the steam is blown down against the powder material on the filter paper 28. At this time, the electromagnetic valve 14 is in a closed condition, and the compressed air supplying means 20 is in a stop condition. In this way, the steaming of the powder material by the superheated steam is carried out. When a predetermined period for the steaming is terminated, the electromagnetic valve 14 is also opened to supply a predetermined amount of hot water into the chamber C, thereby mixing the hot water with the steamed powder material in the chamber C. At this time, a level of the liquid mixture in the chamber C is higher than the outlet of the lower steam supply pipe 71, so that the steam is supplied into the liquid mixture. In this way, the steam agitation of the liquid mixture is carried out. When a predetermined period for the steam agitation is terminated, the lid 65 is lowered to sealingly close an upper portion of the chamber C. Accordingly, the liquid mixture in the chamber C is pressurized by the steam introduced from the steam supply pipes 70 and 71, and is forced down to be filtrated by the filter paper 28, thus obtaining an extract solution (extraction period).

Fig. 19 shows a timing chart of control operation in the case of carrying out the pressure extraction by compressed air in the extraction system 1 shown in Fig. 17. In this case, the electromagnetic valve 15 is opened for a predetermined period of time at starting of the operation for the purpose of the steaming only, and the agitation is not carried out. During the subsequent period for the pressure extraction, the compressed air supplying means 20 is driven to supply compressed air into the chamber C for the purpose of the pressure extraction.

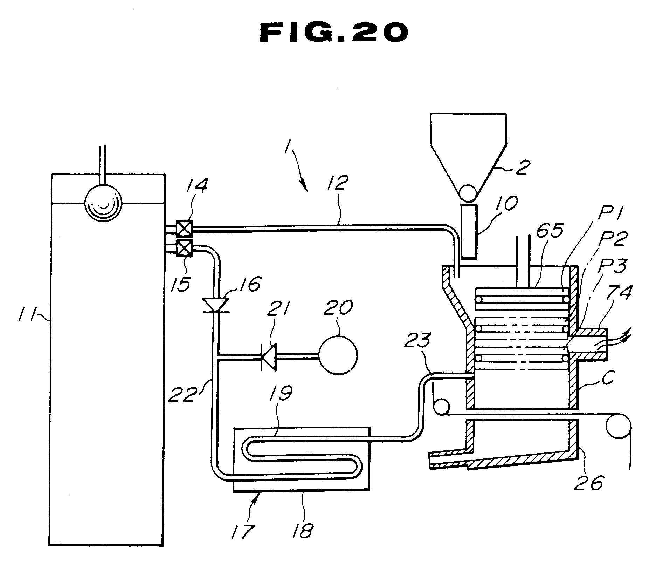

In the case of using steam for the purpose of the steaming or the agitation, there is a possibility that the steam enters the material supplying device 2 located above the chamber C to cause wetting of the powder material in the material supplying device 2. This problem may be solved by modifying the construction of the chamber C as shown in Fig. 20. Referring to Fig. 20, the chamber C is formed with a discharge hole 74, and the steam supply pipe 23 (in this embodiment, a single pipe is provided in the same manner as in Fig. 1) is connected to the chamber C at a position lower than that of the discharge hole 74.

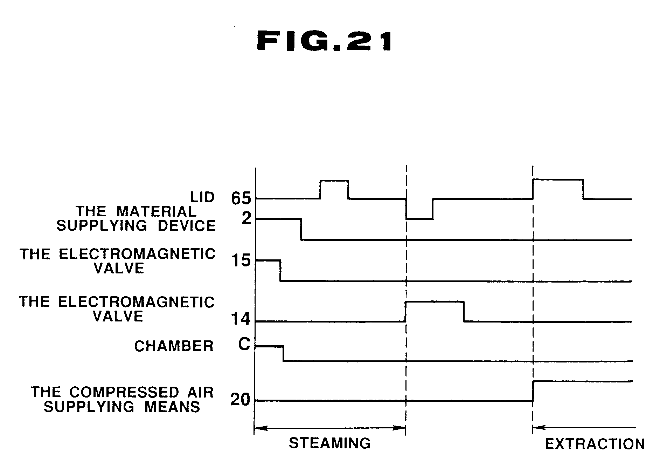

The operation of the extraction system 1 shown in Fig. 20 will now be described with reference to the timing chart shown in Fig. 21. In the initial stage, the lid 65 is in an upper position depicted by P1, so that the upper portion of the chamber C is opened to supply the powder material from the material supplying device 2 into the chamber C. Then, the chamber C is lowered to a middle position depicted by P2 which is higher than the position of the discharge hole 74, so that the upper portion of the chamber C is sealingly closed, and the discharge hole 74 opens into the chamber C below the lid 65. Then, the electromagnetic valve 15 is opened to supply steam into the chamber C, so as to steam the powder material in the chamber C. At this time, since the upper portion of the chamber C is sealingly closed by the lid 65, the steam is prevented from entering the material supplying device 2, and it is discharged from the discharge hole 74 to the outside of the chamber C. When a predetermined period for the steaming is terminated, the lid 65 is lifted again to the position P1 to supply the hot water into the chamber C, thus mixing the hot water with the steamed powder material in the chamber C. After supplying the hot water, the lid 65 is lowered to a lower position depicted by P3 which is lower than the position of the discharge hole 74, so that the discharge hole 74 opens to the chamber C above the lid 65. Then, the compressed air supplying means 20 is driven to pressurize the liquid mixture in the chamber C, thus effecting the pressure extraction. With this construction, it is possible to prevent wetting of the powder material in the material supplying device 2 due to the steam.

According to the present invention, the following advantages can be obtained.

The steam generated from the steam generating means is supplied into the inside of the extraction system as required, thereby increasing a temperature of the inside of the extraction system by a latent heat of the steam. Accordingly, it is possible to prevent the problem that the extraction system is cooled during a waiting period between vending operations, causing cooling of the solution. Thus, a hot and tasty solution such as coffee drink can be provided.

Further, prior to mixing of the powder material with the hot water, the powder material can be steamed by using the steam, so that the powder material is swelled to be readily extracted. In particular, since the steam is used for the steaming of the powder material, the steaming can be effected in a short time as compared with the case where a small amount of hot water is used for the swelling of the powder material. Accordingly, in the case where the extraction system is used in an automatic vending machine, a period of each vending operation can be shortened to become the most effective.

Further, the liquid mixture of the powder material and the hot water can be agitated by supplying the steam, so that the dissolution of the powder material in the hot water can be promoted, and there is no possibility of the liquid mixture being cooled by the agitation. Accordingly, a reheating device can be eliminated, thereby eliminating a burnt smell of the solution in the prior art and providing a more tasty solution.

Further, a predetermined amount of steam can be generated by the heating means upon every vending operation, and this steam is used for the extraction of the solution. Accordingly, it is unnecessary to provide a large-scale boiler formed of a pressure resistant vessel for generating steam at all times, thereby suppressing costs and remarkably improving usability in maintenance.

Particularly, in case of employing the compressed air supplying means, compressed air is supplied to the steam generating means. Accordingly, a residual water content in the steam generating means can be blown off by the compressed air with the steam, and the liquid mixture can be agitated more effectively by supplying the compressed air in combination with the steam.

## Claims

1. An extraction system (1) for mixing powder material with hot water and extracting a solution from a liquid mixture of said powder material and said hot water, said extraction system (1) comprising means for generating steam, **characterized** in that means for introducing said steam generated from said steam generating means (17) into the inside of said extraction system (1) are provided.

2. An extraction system (1) according to claim 1, further comprising means for steaming said powder material by using said steam generated from said steam generating means (17), means for mixing said powder material steamed by said steaming means (17) with said hot water, and means (9) for extracting said solution from said liquid mixture.

3. An extraction system according to claim 1, further comprising means for agitating said liquid mixture by using said steam generated from said steam generating means (17), and means for extracting said solution from said liquid mixture.

4. An extraction system according to claim 1, characterized in that the amounts of powder material and hot water are predetermined, that said extracting is done upon every vending operation and that means are provided in said steam generating means (17) for heating a predetermined amount of cold or hot water to generate said steam upon said every vending operation, and means (9) for extracting said solution from said liquid mixture by using said steam.

5. The extraction system according to one of the claims 1, 2, 3 or 4, further comprising means (20) for supplying compressed air to said steam generating means (17).

## Patentansprüche

1. Ein Extraktionssystem (1) zum Mischen eines pulverförmigen Materials mit heißem Wasser und Extrahieren einer Lösung aus einer flüssigen Mischung des pulverförmigen Materials und dem heißen Wasser, wobei das Extraktionssystem (1) eine Vorrichtung zur Dampferzeugung aufweist, dadurch **gekennzeichnet,** daß eine Vorrichtung zum Zuführen des durch die Dampferzeugungsvorrichtung (17) erzeugten Dampfes in das Innere des Extraktionssystems (1) vorgesehen ist.

2. Extraktionssystem (1) nach Anspruch 1, dadurch gekennzeichnet, daß es weiterhin eine Vorrichtung zur Beaufschlagung des pulverförmigen Materials mit dem durch die Dampferzeugungsvorrichtung (17) erzeugten Dampf, eine Vorrichtung zum Mischen des durch die Dampfvorrichtung (17) mit Dampf beaufschlagten pulverförmigen Materials mit dem heißen Wasser und eine Vorrichtung (9) zum Extrahieren der Lösung aus der flüssigen Mischung aufweist.

3. Extraktionssystem nach Anspruch 1, dadurch gekennzeichnet, daß es weiterhin eine Vorrichtung zum Hin- und Herbewegen der flüssigen Mischung unter Verwendung des durch die Dampferzeugungsvorrichtung (17) erzeugten Dampfes und eine Vorrichtung zum Extrahieren der Lösung aus der flüssigen Mischung aufweist.

4. Extraktionssystem nach Anspruch 1, dadurch gekennzeichnet, daß die Mengen an pulverförmigem Material und heißem Wasser vorher festgelegt sind, daß das Extrahieren nach jedem Verkaufsvorgang stattfindet und daß in der Dampferzeugungsvorrichtung (17) eine Vorrichtung zum Erhitzen einer vorher festgelegten Menge an kaltem oder heißem Wasser zur Erzeugung des Dampfes nach jedem Verkaufsvorgang und eine Vorrichtung (9) zum Extrahieren der Lösung aus der flüssigen Mischung unter Verwendung des Dampfes vorgesehen ist.

5. Extraktionssystem nach einem der Ansprüche 1, 2, 3 oder 4, dadurch gekennzeichnet, daß es weiterhin eine Vorrichtung (20) für die Zuführung von Druckluft zur Dampferzeugungsvorrichtung (17) aufweist.

## Revendications

1. Système d'extraction (1) pour mélanger un matériau pulvérulent à de l'eau chaude et extraire une solution à partir d'un mélange liquide dudit matériau pulvérulent et de ladite eau chaude, ledit système d'extraction (1) comprenant des moyens pour produire de la vapeur, caractérisé en ce que des moyens sont prévus pour introduire ladite vapeur produite par lesdits moyens de production de vapeur (17), à l'intérieur dudit système d'extraction (1).

2. Système d'extraction selon la revendication 1, comprenant en outre des moyens pour injecter de la vapeur dans ledit matériau pulvérulent en utilisant ladite vapeur produite à partir desdits moyens de production de vapeur (17), des moyens pour mélanger ledit matériau pulvérulent, dans laquelle de la vapeur est introduite par lesdits moyens de production de vapeur (17), à ladite eau chaude, et des moyens (9) pour extraire ladite solution à partir dudit mélange liquide.

3. Système d'extraction selon la revendication 1, comprenant en outre des moyens pour agiter ledit mélange liquide moyennant l'utilisation de ladite vapeur produite par lesdits moyens de production de vapeur (17), et des moyens pour extraire ladite solution à partir dudit mélange liquide.

4. Système d'extraction selon la revendication 1, caractérisé en ce que les quantités du matériau pulvérulent et de l'eau chaude sont prédéterminées, que ladite extraction est exécutée lors de chaque opération de distribution automatique et que des moyens sont prévus dans lesdits moyens de production de vapeur (17) pour chauffer une quantité prédéterminée d'eau froide ou chaude pour produire ladite vapeur lors de ladite opération de distribution automatique, et des moyens (9) pour extraire ladite solution à partir dudit mélange liquide en utilisant ladite vapeur.

5. Système d'extraction selon l'une des revendications 1, 2, 3 ou 4, comprenant en outre des moyens pour envoyer de l'air comprimé auxdits moyens de production de vapeur (17).
